# EUROPEAN PATENT APPLICATION

(11) **EP 2 375 082 A2**
(43) Date of publication of application: **12.10.2011**
(21) Application number: 11159709.2
(22) Date of filing: 25.03.2011
(51) Int. Cl.: F04D 29/057, F04D 29/58

(54) **Motor-driven centrifugal compressor**

(30) Priority: 31.03.2010 JP 2010083873
(71) Applicant: Honda Motor Co., Ltd., Tokyo 107-8556 (JP)
(72) Inventor: Daikoku, Kensuke, Wako-shi Saitama 351-0193 (JP); Sato, Takaharu, Wako-shi Saitama 351-0193 (JP)
(74) Representative: Feller, Frank

(57) **Abstract**

A motor-driven centrifugal compressor (10) includes a journal air bearing (52a) having a bump foil (58) and a top foil (60) for restraining a bearing shaft (22) in a resting state and forming an air layer (61) between the top foil (60) and the bearing shaft (22) in a rotating state. The top foil (60) and the bump foil (58) are fixed to an inner circumferential surface (56a) of a ring member (56A), which is fixed to an inner circumferential surface (57a) of a first stationary holding member (57A) of the ring member (56A). The first stationary holding member (57A) has a coolant water channel (74) defined therein. The bearing shaft (22), the air layer (61), the top foil (60), the bump foil (58), and the coolant water channel (74) are arranged in the order named along a normal direction.

## Description

### BACKGROUND OF THE INVENTION

### Field of the Invention:

The present invention relates to a motor-driven centrifugal compressor for compressing air and supplying the compressed air by driving of an electric motor.

### Description of the Related Art:

Generally, motor-driven centrifugal compressors are used as superchargers for efficiently supplying compressed air. For example, motor-driven centrifugal compressors are used as an auxiliary for supplying compressed air to an engine or as an auxiliary for supplying compressed air as an oxygen-containing gas to a fuel cell.

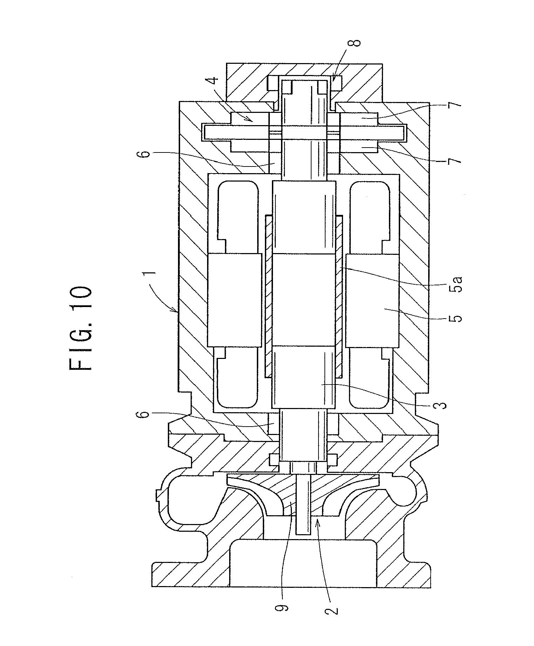

A supercharger for use with a fuel cell which is disclosed in Japanese Laid-Open Patent Publication No. 2007-092646 is known as such a motor-driven centrifugal compressor. As shown in FIG. 10 of the accompanying drawings, the disclosed supercharger comprises a compressor 2 housed in a casing 1 and a bearing device 4 which supports a rotational shaft 3 of the compressor 2.

The casing 1 also houses therein an electric motor 5 for rotating the rotational shaft 3 at a high speed, a pair of front and rear radial foil bearings 6 which support the rotational shaft 3 in radial directions, a pair of front and rear axial foil bearings 7 which support the rotational shaft 3 in axial directions (longitudinal directions), and an auxiliary bearing means 8 which subsidiarily supports the rotational shaft 3 in both radial and axial directions.

The bearing device 4 includes the radial foil bearings 6, the axial foil bearings 7, and the auxiliary bearing means 8. The rotational shaft 3 is of a stepped shape including a central large-diameter portion on which a rotor 5a of the electric motor 5 is mounted and a small-diameter portion at an end thereof on which an impeller 9 is mounted.

The supercharger requires that the rotational shaft 3 be rotated at a high speed. However, when the rotational shaft 3 is rotated at a high speed, the iron loss of the rotor 5a increases, thus making it difficult to operate the supercharger at temperatures below the heat-resistant temperature of the magnets of the electric motor 5.

### SUMMARY OF THE INVENTION

It is an object of the present invention to provide a motor-driven centrifugal compressor which is simple and compact in structure, is capable of efficiently removing heat generated when in rotation, and is capable of rotating at a high speed suitably.

According to the present invention, there is provided a motor-driven centrifugal compressor for compressing air and supplying the compressed air by driving of an electric motor. The motor-driven centrifugal compressor includes a gas bearing including an elastic metal member for restraining a rotatable member in a resting state and forming an air layer between the elastic metal member and the rotatable member in a rotating state, and a stationary holding member disposed in confronting relation to the rotatable member, the elastic metal member being fixed to the stationary holding member.

The stationary holding member has a coolant channel defined therein, and the rotatable member, the air layer, the elastic metal member, and the coolant channel are arranged in the order named along a normal direction which is normal to a tangential direction which is tangential to the air layer or along a normal direction which is normal to a surface of the rotatable member which faces the air layer.

When the rotatable member rotates, there is developed an air flow speed difference in the air layer formed between the rotatable member and the stationary holding member, i.e., between a radially inner air layer and a radially outer air layer. The air flow speed difference enables a good heat transfer between the rotatable member and the stationary holding member. Specifically, heat generated by the rotatable member is transferred smoothly from the rotatable member through the air layer, the elastic metal member, and the coolant channel which are arranged successively along the normal direction. Therefore, the heat generated by the rotatable member upon rotation is efficiently removed by a simple and compact structure, thereby allowing the rotatable member to rotate at a high speed advantageously.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a cross-sectional view of a motor-driven centrifugal compressor according to an embodiment of the present invention;
FIG. 2 is a cross-sectional view of main components of the motor-driven centrifugal compressor;
FIG. 3 is a cross-sectional view of the motor-driven centrifugal compressor, taken along line III - III of FIG. 2;
FIG. 4 is a perspective view of a thrust air bearing of the motor-driven centrifugal compressor;
FIG. 5 is a cross-sectional view of the thrust air bearing, taken along line V - V of FIG. 4;
FIG. 6 is a cross-sectional view, taken along a line different from FIG. 1, of the motor-driven centrifugal compressor;
FIG. 7 is a fragmentary cross-sectional view of a journal air bearing, illustrating a heat transfer based on an air flow speed difference;
FIG. 8 is a front elevational view of the journal air bearing, illustrating a heat transfer based on an air flow speed difference;
FIG. 9 is a perspective view of coolant channels; and
FIG. 10 is a cross-sectional view of a supercharger for use with a fuel cell disclosed in Japanese Laid-Open Patent Publication No. 2007-092646.

### DESCRIPTION OF THE PREFERRED EMBODIMENTS

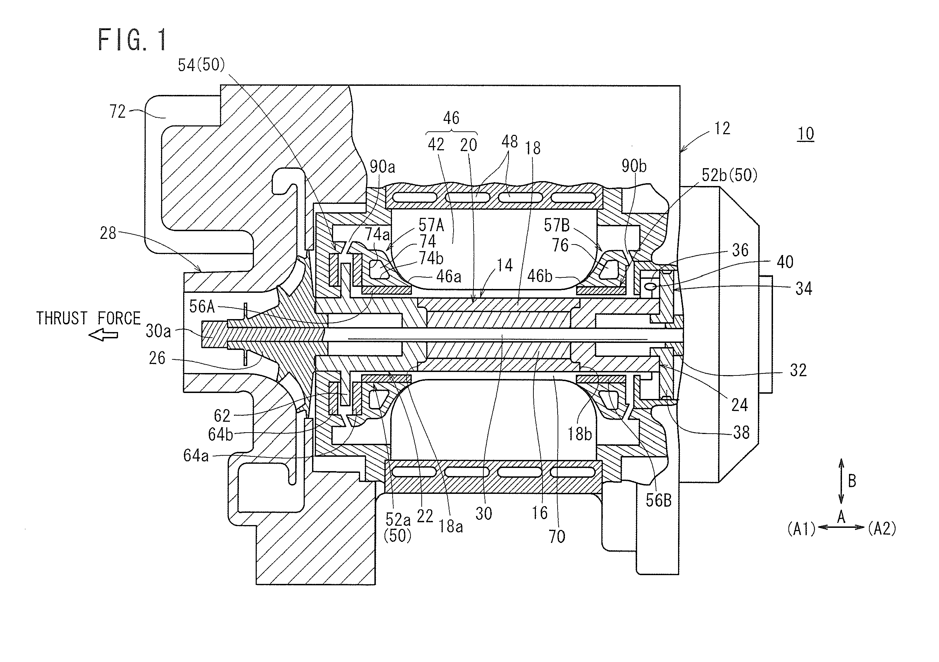

As shown in FIG. 1, a motor-driven centrifugal compressor 10 according to an embodiment of the present invention includes a casing 12 in which a rotatable shaft unit 14 is rotatably mounted.

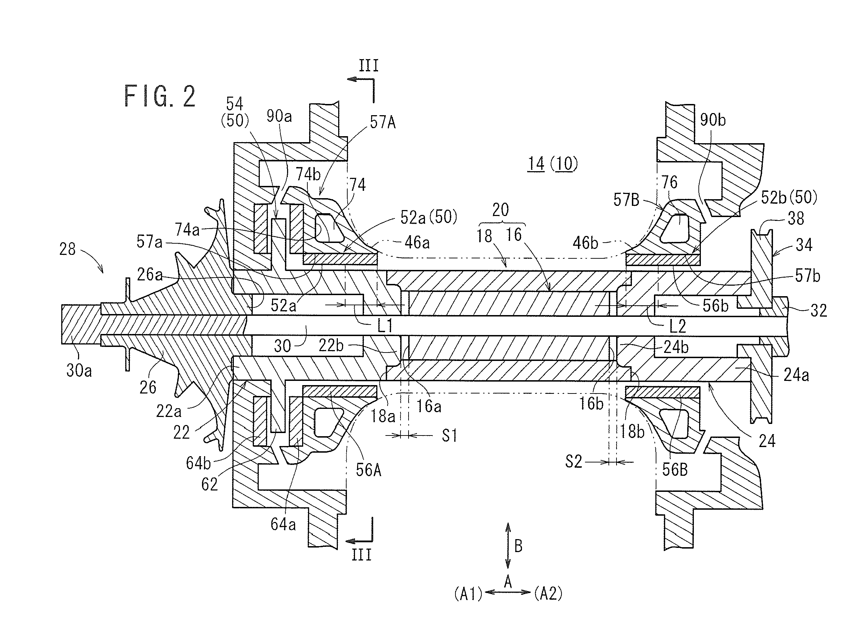

As shown in FIGS. 1 and 2, the rotatable shaft unit 14 comprises a rotor 20 having an annular permanent magnet 16 and a hollow cylindrical protective sleeve 18 disposed around the permanent magnet 16 and housing therein the permanent magnet 16, which may be shrink-fit in the protective sleeve 18, for example, a pair of bearing shafts 22, 24 mounted on respective axial opposite ends as rotatable members, in particular, rotatable shafts, and an impeller 26 mounted on the axial end of the bearing shaft 22 that is remote from the rotor 20.

The impeller 26 serves as part of a centrifugal compression unit 28 and has an end face held against a large-diameter end 30a of a tension shaft 30. The tension shaft 30 which extends axially through the impeller 26 supports thereon the bearing shaft 22, the rotor 20, and the bearing shaft 24 which are arranged successively in the order named from the impeller 26. The bearing shaft 22, the rotor 20, and the bearing shaft 24 are integrally held together on the tension shaft 30 by a fastening member 32 that is threaded over the end of the tension shaft 30 which is remote from the large-diameter end 30a thereof.

The fastening member 32 supports thereon a canceler mechanism 34 for reducing thrust force that is generated along the direction indicated by the arrow A1 when the rotatable shaft unit 14 rotates about its own axis. As shown in FIG. 1, the canceler mechanism 34 includes a canceler disk 38 which is slidable in a pressurization chamber 36 along the directions indicated by the arrow A. When the impeller 26 rotates about its own axis, air is generated, and the generated air flows into the pressurization chamber 36 through a passageway 40.

The casing 12 houses therein an annular stator 42 fixedly disposed around the rotor 20. The stator 42 and the rotor 20 jointly make up a motor 46. The motor 46 includes conical (more specifically, bugle-shaped) linkage members 46a, 46b disposed on its axial ends around the rotatable shaft (i.e., the rotor 20, the bearing shafts 22, 24, etc.).

The protective sleeve 18, which is part of the rotor 20 and is required to be of high rigidity, is made of nickel-based superalloy, e.g., Inconel (tradename of Special Metals Corporation). A plurality of coolant water channels (coolant channels) 48 extend around the stator 42.

As shown in FIG. 2, the protective sleeve 18 has hollow cylindrical protrusions 18a, 18b disposed on its opposite ends on which the bearing shafts 22, 24 are mounted. The protrusions 18a, 18b project axially outwardly beyond respective end faces 16a, 16b of the permanent magnet 16.

The bearing shaft 22 includes a hollow cylindrical member 22a which is open at an axial end thereof and a bottom 22b which is disposed at an opposite axial end thereof and projects radially inwardly to the tension shaft 30. Similarly, the bearing shaft 24 includes a hollow cylindrical member 24a which is open at an axial end thereof and a bottom 24b which is disposed at an opposite axial end thereof and projects radially inwardly to the tension shaft 30.

The bottom 22b of the bearing shaft 22 is held in contact with the hollow cylindrical protrusion 18a of the protective sleeve 18, and the bottom 24b of the bearing shaft 24 is held in contact with the hollow cylindrical protrusion 18b of the protective sleeve 18. The bottoms 22b, 24b and the end faces 16a, 16b of the permanent magnet 16 are spaced from each other by respective distances S1, S2.

A foil gas bearing 50 which holds the bearing shafts 22, 24 is disposed in confronting relation to outer circumferential surfaces of the bearing shafts 22, 24. The foil gas bearing 50 comprises journal air bearings (journal gas bearings) 52a, 52b which hold the bearing shafts 22, 24 in their radial positions and a thrust air bearing (thrust gas bearing) 54 which holds the bearing shaft 22 in its axial position.

The bearing shafts 22, 24, which serve as part of the journal air bearings 52a, 52b, are made of the same nickel-based superalloy as the protective sleeve 18, for example. The journal air bearings 52a, 52b comprise respective ring members 56A, 56B disposed around the outer circumferential surfaces of the bearing shafts 22, 24 with prescribed clearances therebetween.

The bearing shafts 22, 24 are rotatably supported by the ring members 56A, 56B, which are nonrotatably fixed to first and second stationary holding members 57A, 57B, respectively. The ring members 56A, 56B serve as part of the journal air bearings 52a, 52b.

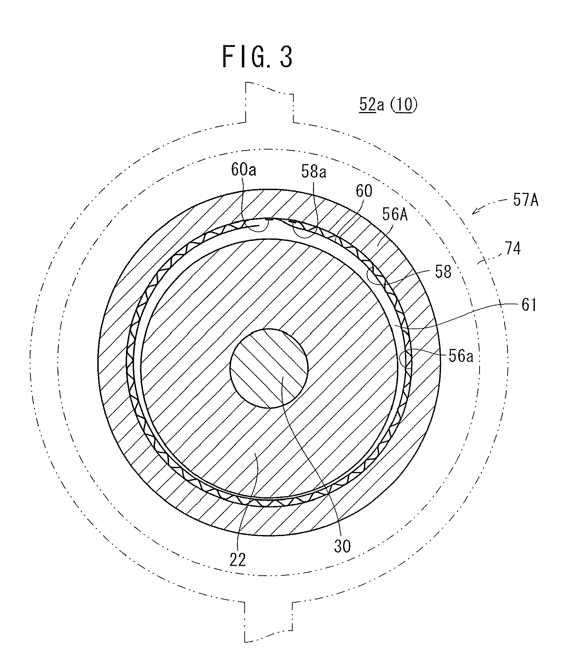

As shown in FIG. 3, a corrugated-sheet-like bump foil 58 and a flat-sheet-like top foil 60 are arranged successively in the order named on an inner circumferential surface 56a of the ring member 56A. The bump foil 58 comprises a single elastic metal member or a plurality of elastic metal members made of iron, aluminum, Inconel, or the like, and has an end 58a fixed by welding or the like to the inner circumferential surface 56a of the ring member 56A and an opposite end as a free end.

The top foil 60 comprises an elastic metal member made of iron, aluminum, Inconel, or the like, and is in the form of a flat sheet curved into an annular shape. The top foil 60 has an end 60a fixed by welding or the like to the inner circumferential surface 56a of the ring member 56A and an opposite end as a free end. When the bearing shaft 22 is at rest (in a resting state), it is restrained by the top foil 60. When the bearing shaft 22 is in rotation (in a rotating state), an air layer 61 is formed between the bearing shaft 22 and the top foil 60. The ring member 56B is of the same structure as the ring member 56A.

As shown in FIGS. 1 and 2, the bearing shaft 22 has a large-diameter flange 62 projecting radially outwardly from the outer circumferential surface thereof. The large-diameter flange 62 is sandwiched between ring members 64a, 64b that are disposed on respective axially opposite sides thereof. The large-diameter flange 62 and the ring members 64a, 64b jointly make up the thrust air bearing 54.

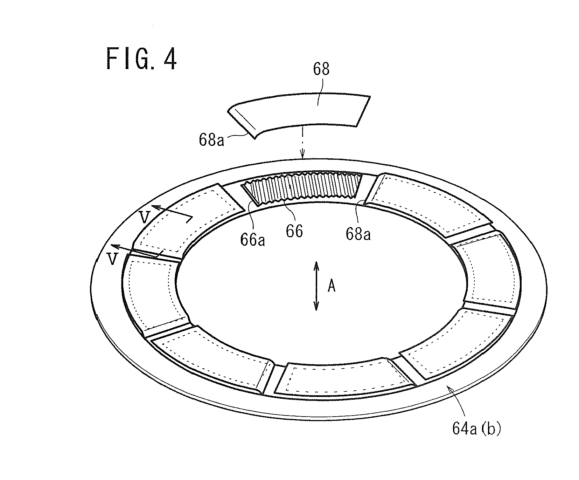

As shown in FIG. 4, each of the ring members 64a, 64b has corrugated-sheet-like bump foils 66 and flat-sheet-like top foils 68 disposed on a surface thereof that faces the large-diameter flange 62. Each of the bump foils 66 and the top foils 68 comprises an elastic metal member made of iron, aluminum, Inconel, or the like. The bump foils 66 and the top foils 68 are superposed and arrayed in an annular pattern along an inner circumferential edge of each of the ring members 64a, 64b.

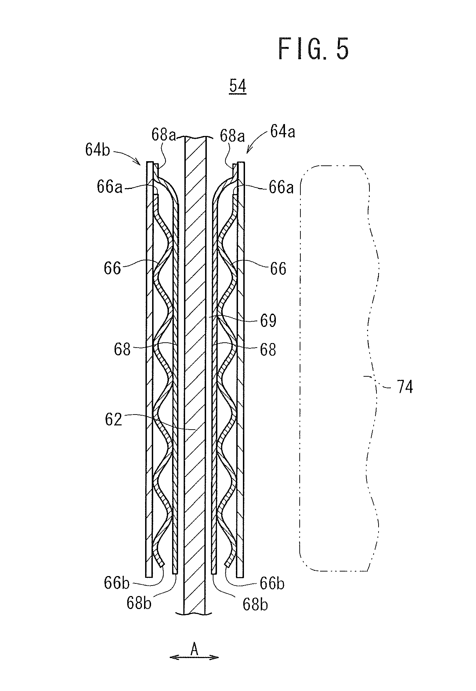

As shown in FIG. 5, each of the bump foils 66 has an end 66a fixed to one of the ring members 64a, 64b by welding or the like and an opposite end 66b as a free end. Each of the top foils 68 has an end 68a fixed to one of the ring members 64a, 64b by welding or the like and an opposite end 68b as a free end. When the large-diameter flange 62 is at rest (in a resting state), it is restrained by the top foil 68. When the large-diameter flange 62 is in rotation (in a rotating state), an air layer 69 is formed between the large-diameter flange 62 and the top foil 68. The ring members 64a, 64b are fixed to the first stationary holding member 57A.

As shown in FIG. 2, the impeller 26 has an axial end 26a which is remote from the large-diameter end 30a of the tension shaft 30 and coaxially fitted in the hollow cylindrical member 22a of the bearing shaft 22 by a spigot-and-socket joint. The bottoms 22b, 24b of the bearing shafts 22, 24 are coaxially fitted respectively in the hollow cylindrical protrusions 18a, 18b of the protective sleeve 18 by a spigot-and-socket joint.

As shown in FIG. 1, the casing 12 has a coolant channel 70 defined between the protective sleeve 18 and the stator 42 of the motor 46. The inlet of the coolant channel 70 and the passageway 40 of the canceler mechanism 34 are connected to a compressor outlet 72 of the centrifugal compression unit 28. When the impeller 26 rotates about its own axis, it compresses air and delivers the compressed air from the compressor outlet 72 into the inlet of the coolant channel 70 and the passageway 40 of the canceler mechanism 34.

The first stationary holding member 57A has a coolant water channel (coolant channel) 74 defined therein, and the second stationary holding member 57B has a coolant water channel (coolant channel) 76 defined therein. As shown in FIG. 3, the bearing shaft 22, the air layer 61, the top foil 60, the bump foil 58, and the coolant water channel 74 are arranged in the order named along a normal direction which is normal to a tangential direction which is tangential to the air layer 61.

Similarly, the bearing shaft 24, the air layer 61, the top foil 60, the bump foil 58, and the coolant water channel 76 are arranged in the order named along the normal direction.

As shown in FIG. 5, the large-diameter flange 62, the air layer 69, the top foil 68, the bump foil 66 on the ring member 64a, and the coolant water channel 74 are arranged in the order named along a normal direction which is normal to a surface of the large-diameter flange 62 which faces the air layer 69.

As shown in FIGS. 1 and 2, the coolant water channels 74, 76 have their axial opening width which is progressively greater toward the central axis of the first and second stationary holding members 57A, 57B. The coolant water channel 74 is defined, in an axial cross section, by a first inner wall surface 74a extending in a thrust direction, i.e., the direction indicated by the arrow B, which is perpendicular to an axial direction, i.e., the direction indicated by the arrow A, of the rotatable shaft unit 14, the first inner wall surface 74a facing the thrust air bearing 54, and a second inner wall surface 74b extending in the axial direction and which faces the journal air bearing 52a.

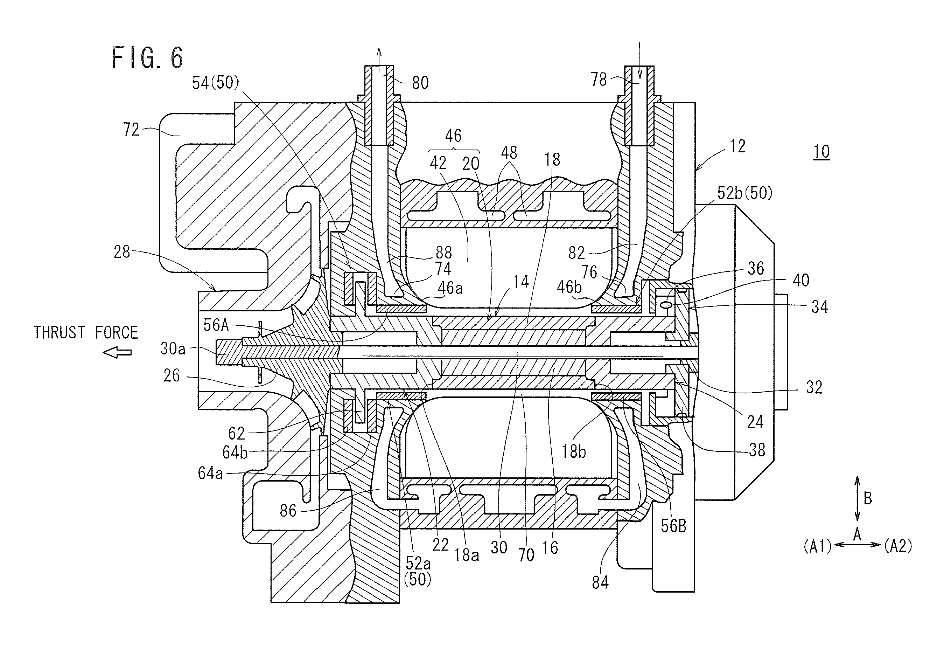

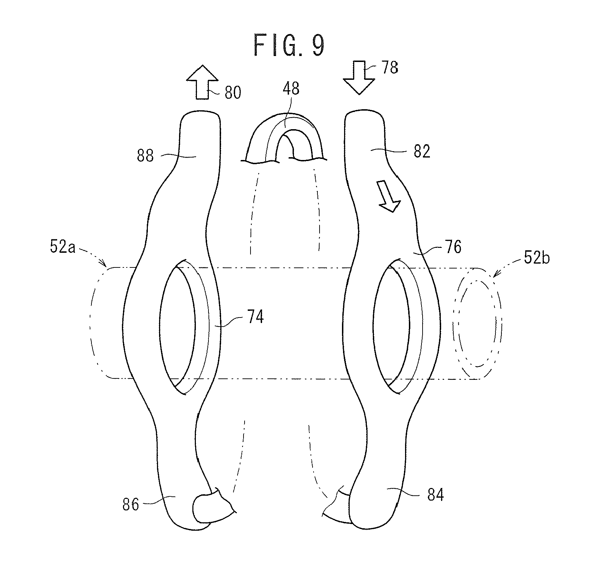

As shown in FIG. 6, the casing 12 has a coolant water inlet 78 on the canceler mechanism 34 side and a coolant water outlet 80 on the impeller 26 side. As shown in FIGS. 6 and 9, the coolant water inlet 78 is connected to the coolant water channel 76 through a passage 82. The coolant water channel 76 is of a ring shape extending around the outer circumferential surface of the journal air bearing 52b.

The coolant water channel 76 has a lower end connected to an end of a passage 84 whose other end is connected to the coolant water channels 48 which extend around the outer circumferential surface of the stator 42. The coolant water channels 48, which extend around the motor 46, allow a coolant water to flow therein in the direction indicated by the arrow A. The coolant water channels 48 have an outlet on the impeller 26 side which is connected through a passage 86 to the coolant water channel 74. The coolant water channel 74 extends around the journal air bearing 52a and the thrust air bearing 54, and is connected through a passage 88 to the coolant water outlet 80.

As shown in FIGS. 1 and 2, at least portions of the journal air bearings 52a, 52b extend respectively into the linkage members 46a, 46b of the motor 46 by respective distances L1, L2. The first and second stationary holding members 57A, 57B have respective inner circumferential surfaces 57a, 57b surrounding the entire outer circumferential surfaces of the journal air bearings 52a, 52b. The first and second stationary holding members 57A, 57B have respective air vent holes 90a, 90b defined therein for preventing air from being trapped in the thrust air bearing 54 and the journal air bearings 52a, 52b.

Operation of the motor-driven centrifugal compressor 10 will be described below.

When the stator 42 of the motor 46 is energized, the permanent magnet 16 and the protective sleeve 18 of the rotor 20 rotate in unison with the tension shaft 30. The impeller 26 which is supported on the tension shaft 30 rotates at a relatively high speed, and then draws air from the atmosphere into the centrifugal compression unit 28.

The air that is drawn by the impeller 26 is compressed and fed by the centrifugal compression unit 28 to the oxygen-containing gas supply system of a fuel cell (not shown), for example. The fuel cell is supplied with a fuel gas, i.e., a hydrogen gas, from a fuel gas supply system (not shown). Therefore, the fuel cell generates electric energy based on a reaction between the air that is supplied to the cathode of the fuel cell and the hydrogen that is supplied to the anode of the fuel cell.

Part of the air that is drawn into the centrifugal compression unit 28 is compressed thereby and supplied from the compressor outlet 72 to the coolant channel 70 in the casing 12. The air cools the motor 46 while flowing through the coolant channel 70, and is then discharged out of the motor-driven centrifugal compressor 10.

Part of the air compressed by the centrifugal compression unit 28 is supplied from the compressor outlet 72 through the passageway 40 of the canceler mechanism 34 to the pressurization chamber 36. When the air flows into the pressurization chamber 36, it applies a pressing force to the canceler disk 38 in the pressurization chamber 36 in a direction away from the impeller 26, i.e., in the direction indicated by the arrow A2. Therefore, the thrust force applied in the direction indicated by the arrow A1 is reduced by the canceler mechanism 34 upon rotation of the impeller 26.

When the rotor 20 is at rest, the bearing shafts 22, 24 are restrained by the inner circumferential surfaces of the top foils 60 of the journal air bearings 52a, 52b. When the bearing shafts 22, 24 are rotated in unison with the rotor 20 upon energization of the motor 46, the bump foils 58 are elastically deformed toward the inner circumferential surfaces 56a, 56b of the ring members 56A, 56B by the viscosity of the air which acts as a working gas. Therefore, the air layers 61 are formed between the top foils 60 and the outer circumferential surfaces of the bearing shafts 22, 24.

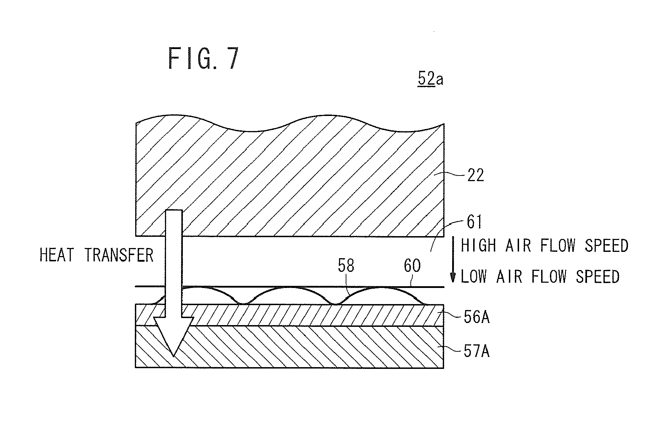

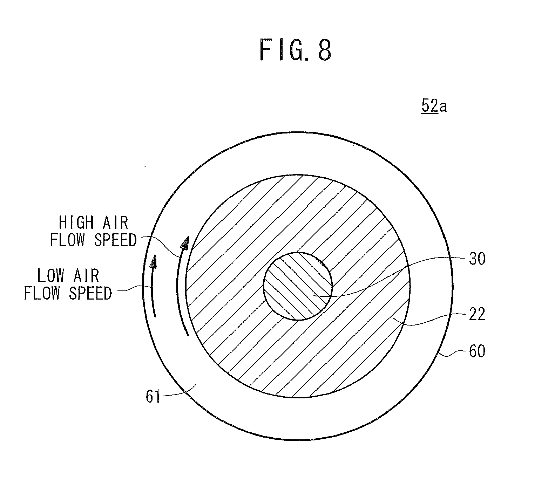

At this time, there is developed an air flow speed difference in the air layers 61 between the outer circumferential surfaces of the bearing shafts 22, 24 that are rotating at a high speed and the inner circumferential surfaces of the top foils 60 that are stationary, i.e., between a radially inner air layer and a radially outer air layer. The air flow speed difference makes it possible to perform a good heat transfer. More specifically, as shown in FIGS. 7 and 8, the air layer 61 is formed between the outer circumferential surface of the bearing shaft 22 and the top foil 60. Due to the viscosity of the air of the air layer 61, the air flow speed is higher in the vicinity of the bearing shaft 22 that is rotating at a high speed, while the air flow speed is lower in the vicinity of the top foil 60. Therefore, a good heat transfer is achieved from the bearing shafts 22, 24 through the air layer 61 toward the top foil 60.

According to the present embodiment, as shown in FIG. 3, the bearing shaft 22, the air layer 61, the top foil 60, the bump foil 58, and the coolant water channel 74 are arranged in the order named along the normal direction that is normal to the bearing shaft 22. Owing thereto, the heat of the bearing shaft 22 which is rotating at a high speed is smoothly transferred to the air layer 61, the top foil 60, the bump foil 58, and the coolant water channel 74, advantageously.

Consequently, when the bearing shaft 22 rotates, the heat of the bearing shaft 22 is efficiently removed through a simple and compact structure, thereby allowing the bearing shaft 22 to rotate at a high speed. The heat of the bearing shaft 24 is also efficiently removed in the same manner as with the bearing shaft 22.

As shown in FIG. 5, the large-diameter flange 62 of the thrust air bearing 54 rotates at a high speed in unison with the bearing shaft 22, with the air layer 69 being formed between the large-diameter flange 62 and each of the top foils 68.

The large-diameter flange 62, the air layer 69, the top foil 68, the bump foil 66 on the ring member 64a, and the coolant water channel 74 are arranged in the order named along the normal direction which is normal to the surface of the large-diameter flange 62 which faces the air layer 69. Therefore, the heat of the large-diameter flange 62 is smoothly and reliably transferred to the air layer 69, the top foil 68, the bump foil 66, and the coolant water channel 74, and hence is efficiently removed.

The motor 46 includes the conical linkage members 46a, 46b disposed on its axial ends, and at least portions of the journal air bearings 52a, 52b extend respectively into the linkage members 46a, 46b. The inner circumferential surfaces 57a, 57b of the first and second stationary holding members 57A, 57B surround the entire circumferential surfaces of the journal air bearings 52a, 52b. Therefore, the journal air bearings 52a, 52b can be arranged as close to the stator 42 as possible, thereby making it possible to reduce the entire axial length of the rotatable shaft unit 14.

The rotatable shaft unit 14 can thus be reduced in size and can have its resonant frequency shifted into a higher frequency range, so that the rotatable shaft unit 14 is well prevented from resonating during rotation thereof.

The coolant water channels 74, 76 defined in the first and second stationary holding members 57A, 57B have their axial opening width which is progressively greater toward the central axis of the first and second stationary holding members 57A, 57B. Accordingly, the coolant water channels 74, 76 have a relatively large surface area for effectively cooling the bearing shafts 22, 24 uniformly along their axes.

The coolant water channel 74 is defined by the first inner wall surface 74a extending in the thrust direction, i.e., in the direction indicated by the arrow B, of the rotatable shaft unit 14 in confronting relation to the thrust air bearing 54, and the second inner wall surface 74b extending in the axial direction, i.e., in the direction indicated by the arrow A, in confronting relation to the journal air bearing 52a. Therefore, the thrust air bearing 54 and the journal air bearing 52a can be cooled through the single coolant water channel 74, thereby achieving a simple structure.

As shown in FIGS. 6 and 9, the coolant water is supplied from the coolant water inlet 78 through the passage 82 to the coolant water channel 76 on the journal air bearing 52b side. Then, the coolant water flows through the passage 84 into the coolant water channels 48 around the stator 42. Thereafter, the coolant water flows through the coolant water channels 48 and then through the passage 86 into the coolant water channel 74 on the journal air bearing 52a side, from which the coolant water is discharged through the passage 88 into the coolant water outlet 80. The coolant water thus cools the journal air bearing 52b, the stator 42, and the journal air bearing 52a successively in the order named. As the coolant water first cools the journal air bearing 52b which has less heat radiation routes, the coolant water is able to uniformize the temperatures of the journal air bearings 52a, 52b.

The foil gas bearing 50 is used as a gas bearing in the present embodiment. However, the present invention is also applicable to other gas bearings such as air bearings employing a tilting pad of metal.

In the illustrated embodiment, the coolant water inlet 78 is disposed on the canceler mechanism 34 side, and the coolant water outlet 80 is disposed on the impeller 26 side. Conversely, the coolant water outlet 80 may be disposed on the canceler mechanism 34 side, and the coolant water inlet 78 may be disposed on the impeller 26 side. According to such an alternative structure, the coolant water flows from the coolant water channel 74 on the journal air bearing 52a side through the coolant water channel 48 into the coolant water channel 76 on the journal air bearing 52b side.

A motor-driven centrifugal compressor (10) includes a journal air bearing (52a) having a bump foil (58) and a top foil (60) for restraining a bearing shaft (22) in a resting state and forming an air layer (61) between the top foil (60) and the bearing shaft (22) in a rotating state. The top foil (60) and the bump foil (58) are fixed to an inner circumferential surface (56a) of a ring member (56A), which is fixed to an inner circumferential surface (57a) of a first stationary holding member (57A) of the ring member (56A). The first stationary holding member (57A) has a coolant water channel (74) defined therein. The bearing shaft (22), the air layer (61), the top foil (60), the bump foil (58), and the coolant water channel (74) are arranged in the order named along a normal direction.

## Claims

1. A motor-driven centrifugal compressor (10) for compressing air and supplying the compressed air by driving of an electric motor (46), comprising:
a gas bearing (50) including an elastic metal member (60) for restraining a rotatable member (22) in a resting state and forming an air layer (61) between the elastic metal member (60) and the rotatable member (22) in a rotating state;
a stationary holding member (57A) disposed in confronting relation to the rotatable member (22), the elastic metal member (60) being fixed to the stationary holding member (57A);
wherein the stationary holding member (57A) has a coolant channel (74) defined therein; and
the rotatable member (22), the air layer (61), the elastic metal member (60), and the coolant channel (74) are arranged in the order named along a normal direction which is normal to a tangential direction which is tangential to the air layer (61) or along a normal direction which is normal to a surface of the rotatable member (22) which faces the air layer (61).

2. The motor-driven centrifugal compressor (10) according to claim 1, wherein the gas bearing (50) comprises a journal gas bearing (52a) which supports a rotatable shaft (22) serving as the rotatable member (22) in a journal direction;
the motor (46) includes a conical linkage member (46a) on an axial end thereof around the rotatable shaft (22);
the journal gas bearing (52a) has at least a portion extending into the conical linkage member (46a); and
the stationary holding member (57A) has an inner circumferential surface (57a) surrounding the entire outer circumferential surface of the journal gas bearing (52a).

3. The motor-driven centrifugal compressor (10) according to claim 2, wherein the coolant channel (74) has an axial opening width that is progressively greater toward a central axis of the stationary holding member (57A).

4. The motor-driven centrifugal compressor (10) according to claim 2, wherein the gas bearing (50) comprises a thrust gas bearing (54) disposed adjacent to the journal gas bearing (52a); and
the coolant channel (74) is defined by a first inner wall surface (74a) extending in a thrust direction perpendicular to an axial direction of the rotatable member (22) in axial cross section and which faces the thrust gas bearing (54), and a second inner wall surface (74b) extending in the axial direction and which faces the journal gas bearing (52a).

5. The motor-driven centrifugal compressor (10) according to claim 1, wherein the motor (46) includes a rotor (20), further comprising:
an impeller (26) mounted on an axial end of the rotor (20);
wherein the gas bearing (50) comprises:
a first journal gas bearing (52a) disposed between the axial end of the rotor (20) and the impeller (26); and
a second journal gas bearing (52b) disposed at an axial opposite end of the rotor (20);
wherein the stationary holding member comprises:
a first stationary holding member (57A) holding the first journal gas bearing (52a), the coolant channel (74) being defined in the first stationary holding member (57A); and
a second stationary holding member (57B) holding the second journal gas bearing (52b), the coolant channel (76) being defined in the second stationary holding member (57B); and
wherein a coolant flows successively through the coolant channel (76) defined in the second stationary holding member (57B), a coolant channel (48) extending around the motor (46), and the coolant channel (74) defined in the first stationary holding member (57A).
